(19) Europäisches Patentamt
European Patent Office
Office européen des brevets

(11) EP 0 587 229 B1

(12) EUROPEAN PATENT SPECIFICATION

(45) Date of publication and mention of the grant of the patent:
**08.05.2002 Bulletin 2002/19**

(51) Int Cl.[7]: **G03C 1/83**, C09B 23/00, G03C 1/005, G03C 5/17

(21) Application number: **93202542.2**

(22) Date of filing: **31.08.1993**

(54) **Photographic element containing a filter dye for rapid processing applications**

Photographisches Element,das einen Filterfarbstoff enthält, für Schnellverarbeitungs-Verwendungen

Element photographique contenant un colorant-filtre pour applications avec traitement rapide

(84) Designated Contracting States:
**BE DE FR GB NL**

(30) Priority: **11.09.1992 EP 92202767**

(43) Date of publication of application:
**16.03.1994 Bulletin 1994/11**

(73) Proprietor: **AGFA-GEVAERT**
**2640 Mortsel (BE)**

(72) Inventors:
- **Kiekens, Eric, c/o Agfa-Gevaert N.V.**
**B-2640 Mortsel (BE)**
- **Callant, Paul Agfa-Gevaert N.V.**
**B-2640 Mortsel (BE)**

(56) References cited:

| | |
|---|---|
| **EP-A- 0 276 566** | **BE-A- 799 340** |
| **GB-A- 656 515** | **GB-A- 2 032 636** |

- **FRANCES M HAMER 'THE CYANINE DYES AND RELATED COMPOUNDS' 1964 , JOHN WILEY AND SONS (INTERSCIENCE) , NEW YORK USA * page 80, line 21 - line 25 * * page 82, table II * * page 698, paragraph 1 ***

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 587 229 B1

## Description

1. Field of the invention.

The present invention relates to photographic elements comprising specified filter dyes, their preparation and use of such elements in rapid processing applications.

2. Background of the Invention

Non-spectrally sensitizing dyes are widely used in photographic elements, particularly in photographic elements of the silver halide type. They may be used in a photosensitive silver halide emulsion layer as screening dyes, in an undercoat adjacent to the photosensitive layer and/or in a backing layer on the side of the support opposite to the photosensitive layer(s) to absorb reflected and scattered light thereby serving as antihalation dye or in an overcoat or interlayer to shield a particular photosensitive layer against undesired exposure being therefore referred to as filter or absorber dye, thereby adjusting the sensitivity of a photographic element as required in the production specifications.

For example in order to improve image sharpness an absorber dye can be present in one or more filter layers between silver halide emulsion layers that are coated at opposite sides of a transparent film support of an X-ray recording material. The imagewise exposure of said recording material proceeds in a cassette between a pair of X-ray intensifying screens that each are held in contact with an adjacent silver halide emulsion layer. By said arrangement the imaging light that would cross the support and to some extent becomes scattered thereby, is considerably attenuated and cannot give rise to an unsharp image in an opposite silver halide emulsion layer.

Spectrally the dye absorption spectrum should approximately be equal to the sensitivity spectrum of the corresponding silver halide emulsion in the layer of which a sharp image has to be reproduced.

On the one hand it is very important that filter dyes remain, i.e. that they are non-migratory, in the layer wherein they have been incorporated especially when this layer is in direct contact with the silver halide emulsion layer in order to prevent a desensitizing action on the silver halide. On the other hand the filter dyes may not stain the photographic material after image processing. Therefore preference is given to filter dyes that decolorize or can be removed from the photographic element in the processing stage. This requirement is nowadays becoming more and more stringent as rapid processing times are of increasing interest.

As described in US-P 3,560,214 dyes comprising a carboxyl and phenyl substituted pyrazoline nucleus linked through a methine group to a dialkylaminophenyl group can be removed relatively easily in alkaline aqueous processing liquids but lack sufficient fastness to diffusion in hydrophilic colloid layers.

Other filter dyes characterized by the presence of `a 2-pyrazolin-5-one nucleus substituted with a carboxyphenyl group or a sulphonated phenyl group and including a methine group or chain linked to a dialkylamino group are described in US-P 4,857,446 and also in GB-A 2 032 636, wherein the monomethine dyes have been substituted at the monomethine chain by H or by CN. The decolorization of said filter dyes proceeds very rapidly in alkaline aqueous processing baths. The monomethine dyes have an absorption spectrum of which the maximum is in the shorter wavelength range of the visible spectrum so that normally a second filter dye is needed to block or absorb green light and even a third one to absorb radiations of longer wavelengths, e.g. radiations in the red or even in the infrared region.

Other dyes have been described in BE 799 340, wherein trimethine isoxazolone dyes have been provided, substituted on one methine group with an aliphatic ester or an amide chain, but wherein the ester or amide group or function is not directly bound onto the said methine group.

Once a filter dye has been selected, the problem is how to get the filter dye in a coated layer so that all the requirements mentioned previously are met.

One of the possibilities is to make use of solid particle dispersions of water insoluble dyes as has been described in EP 0,384,633 A2; EP 0,323,729 A2; EP 0,274,723 B1, EP 0,276,566 B1, EP 0,351,593 A2 and US-Patents 4,900,653; 4,904,565; 4,949,654; 4,940,654; 4,948,717; 4,988,611 and 4,803,150.

Another possibility is offered in Research Disclosure 19551 (July 1980) which describes an approach of associating hydrophobic compounds with latex polymer particles.

EP 0,401,709 A2 describes the dissolution of hydrophobic dyes into oil droplets being substantially insoluble in water and the preparation of the corresponding oilformer dispersions or loaded polymer latex dispersions.

To prevent dye wandering, the dye is often coated with a mordant to bind the dye in the layer in which it is coated as is e.g. illustrated in US-Patent 2,527,583. As dye mordants polymers are often used.

Another possibility is offered by adsorption of dyes at the surface of very fine light-insensitive silver halide crystals with the expectable disadvantages of the coating of more silver halide crystals and possibly fixation difficulties.

Very few dyes satisfy the above requirements especially when rapid processing is concerned. Moreover, apart from the requirement of non-diffusibility and of rapid decolourizing or removal by rapid processing that the dyes should meet, they should have high stability in the photographic material, not only under the influence of the ingredients present

in the emulsion layers prior to coating, but especially under severe storage conditions of the packed material e.g. under circumstances of high temperatures and high degrees of humidity.

3. Objects and Summary of the Invention

It is an object of the present invention to provide a photographic material having new dyes that can be incorporated in non-migratory state in hydrophilic colloid layers of photographic materials wherefrom they can be rapidly removed in alkaline aqueous liquids used in the processing of said materials.

It is a further object of the invention to provide a photographic material having new dyes providing high density in the required spectral region, thereby reducing the cross-over effect in double-sided photographic elements, particularly radiographic materials.

Other objects will become apparent from the description hereinafter.

In accordance with the present invention a photographic material comprising a support and at least one light-sensitive silver halide emulsion layer is provided, characterised in that it comprises in a hydrophilic colloid layer at least one filter dye,present in solid particle dispersion form, wherein said dyes are provided corresponding to the following general formula (I):

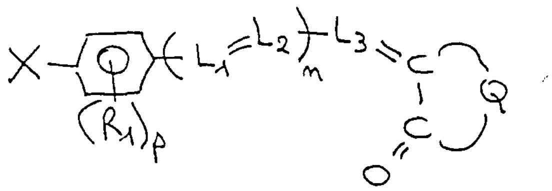

(I)

wherein

n represents 0 or 1;
p represents 0, 1 or 2;
Q represents the atoms necessary to form an acidic nucleus such as pyrazolone, barbituric acid, thiobarbituric acid, rhodanine, hydantoine, oxazolidindione, thio-oxazolidindione, isoxazolinone etc.;
$R_1$ represents hydrogen, substituted or unsubstituted alkyl, substituted or unsubstituted aryl, $COOR_2$,$NHCOR_3$ or $NHSO_2R_4$ with $R_2$ representing hydrogen or substituted or unsubstituted alkyl, $R_3$ and $R_4$ representing substituted or unsubstituted alkyl, or substituted or unsubstituted aryl;
X represents $OR_5$, $SR_5$ or $NR_6R_7$ wherein
$R_5$ represents H, substituted or unsubstituted alkyl, substituted or unsubstituted aryl and
each of $R_6$ and $R_7$ which may be the same or different represents hydrogen, substituted or unsubstituted alkyl, substituted or unsubstituted aryl or the necessary atoms, e.g. trimethylene, to form a ring together with the N-atom to which they are attached and the C-atom of the phenylene ring in ortho position with respect to said N-atom; $R_6$ and $R_7$ together may also represent the necessary atoms to form a ring with the N-atom to which they are attached;
$L_1$, $L_2$, $L_3$ represent substituted or unsubstituted methine with the proviso that at least one of $L_1$, $L_2$ or $L_3$ must be substituted by $-CONR_8R_9$;
$R_8$ and $R_9$ which may be the same or different represent hydrogen, substituted or unsubstituted alkyl, substituted or unsubstituted aryl,

and wherein at least one of $R_1$ to $R_9$ contains a weakly acidic ionizable group.

More preferably dyes of the present invention correspond to formula (II):

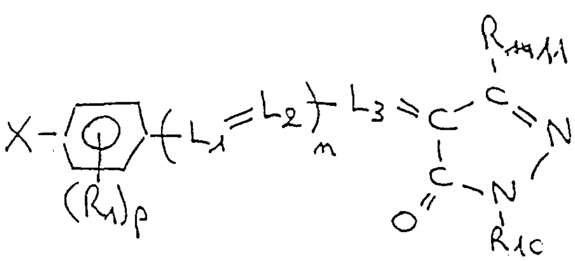

(II)

wherein each of n, p, X, $R_1$, $L_1$, $L_2$ and $L_3$ has one of the meanings given hereinbefore and wherein

$R_{10}$ represents hydrogen, substituted or unsubstituted alkyl, substituted or unsubstituted aryl, or sulfolanyl,
$R_{11}$ represents hydrogen, substituted or unsubstituted alkyl, substituted or unsubstituted aryl,$COOR_2$, $NHCOR_3$, $NHSO_2R_4$, with $R_2$,
$R_3$ and $R_4$ representing hydrogen, substituted or unsubstituted alkyl, or substituted or unsubstituted aryl, and wherein at least one of $R_1$ to $R_{11}$ contains an alkali-soluble group.

In accordance with the present invention a photographic element is provided comprising a support and at least one photo-sensitive silver halide emulsion layer, wherein said element comprises, dispersed in a hydrophilic water-permeable colloid binder, e.g. gelatin, at least one dye according to the above general formula. Further in accordance with the present invention a photographic element is provided comprising a support and at least one photo-sensitive silver halide emulsion layer, wherein said element comprises said at least one dye according to the above formula in a solid particle state by acidifying the slightly alkaline coating solution "in situ" at the moment the coating solution is applied.
The invention also comprises the use of the claimed element in rapid processing applications shorter than 60 seconds comprising developing, fixing, rinsing and drying steps.

4. Detailed description of the Invention

The presence of an amide group as a substituent on the methine chain is very characteristic for the dyes suitable for use in this invention.
The absence of this amide-group does not only affect the spectral behaviour, shifting the absorption to shorter wavelengths, but doesn't allow the dye to be decolourized quickly enough, as required in rapid processing conditions, especially for 38 s processing cycles.
The synthesis of dyes according to the present invention may follow different suitable ways, a schematic way of synthesizing said dye being illustrated in reaction scheme 1 given hereinafter.

Reaction scheme 1.

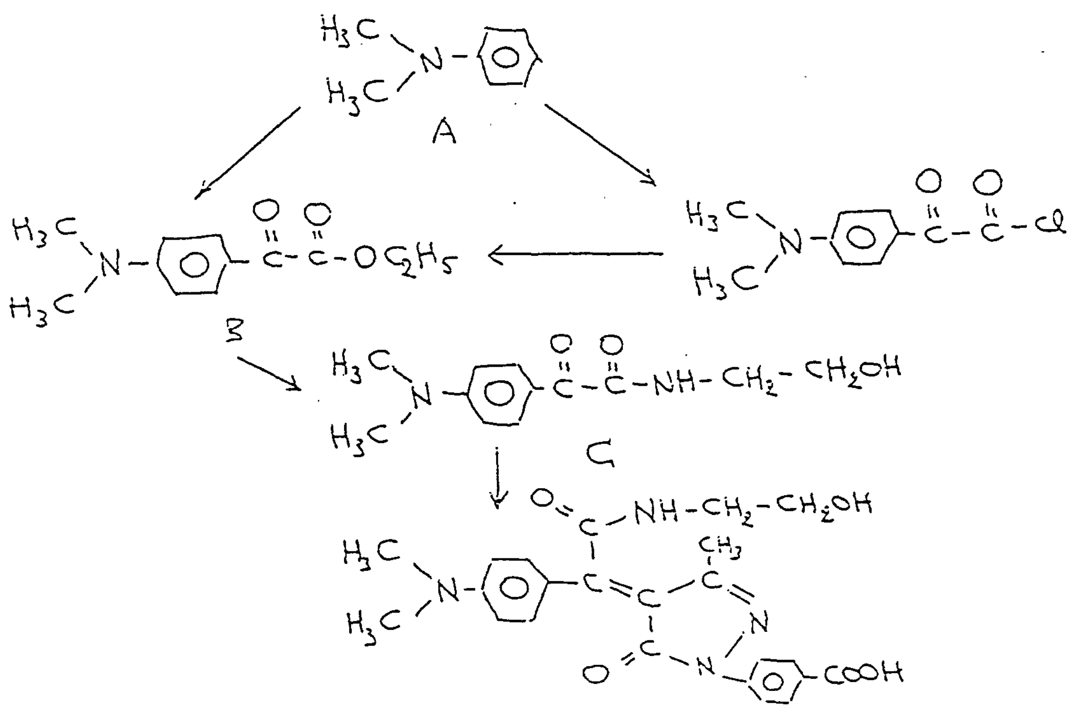

The monomethine dyes can be synthesized via different suitable ways.
One way consists in the conversion of dialkylaminobenzene A to the alpha-keto-ester B. At least three methods are described in literature:

a. The reaction of A with diethyl oxalate in the presence of aluminum trichloride (Guyot, Compt. Rend. 144, 1120 (1907)).

b. The reaction of A with oxalyl chloride, followed by ethanolysis of the intermediate acid chloride (Staudinger, Stockmann, Chem. Ber. 42, 224 (1909)).

c. The reaction of A with ethyl oxalyl chloride (Michler, Hanhardt, Chem. Ber. 10,2081(1877)).

The thus obtained ester B is then converted to the amide C by treatment with ethanolamine.

Following the second suitable way, amides such as C can be obtained directly by reaction of amines with the intermediate acid chloride as is described (but not for C) in Wright and Gutsell, J. Org. Chem. 24, 265 (1959).

Keto-amides such as C can easily be condensed with acidic nuclei such as pyrazolones by several known methods including refluxing the components in toluene with azeotropic destillation or refluxing the components in ethanol using known catalysts such as amines, amine salts or zinc chloride.

Dispersions of the dye obtained following reaction scheme 1 according to this invention show a maximum absorption peak at a wavelenght of 560 nm, said wavelength value being shifted about 100 nm more bathochromically in comparison with the corresponding dye without amide-substitution.

Trimethine dyes may be obtained following reaction scheme 2 according to this invention.

Reaction scheme 2.

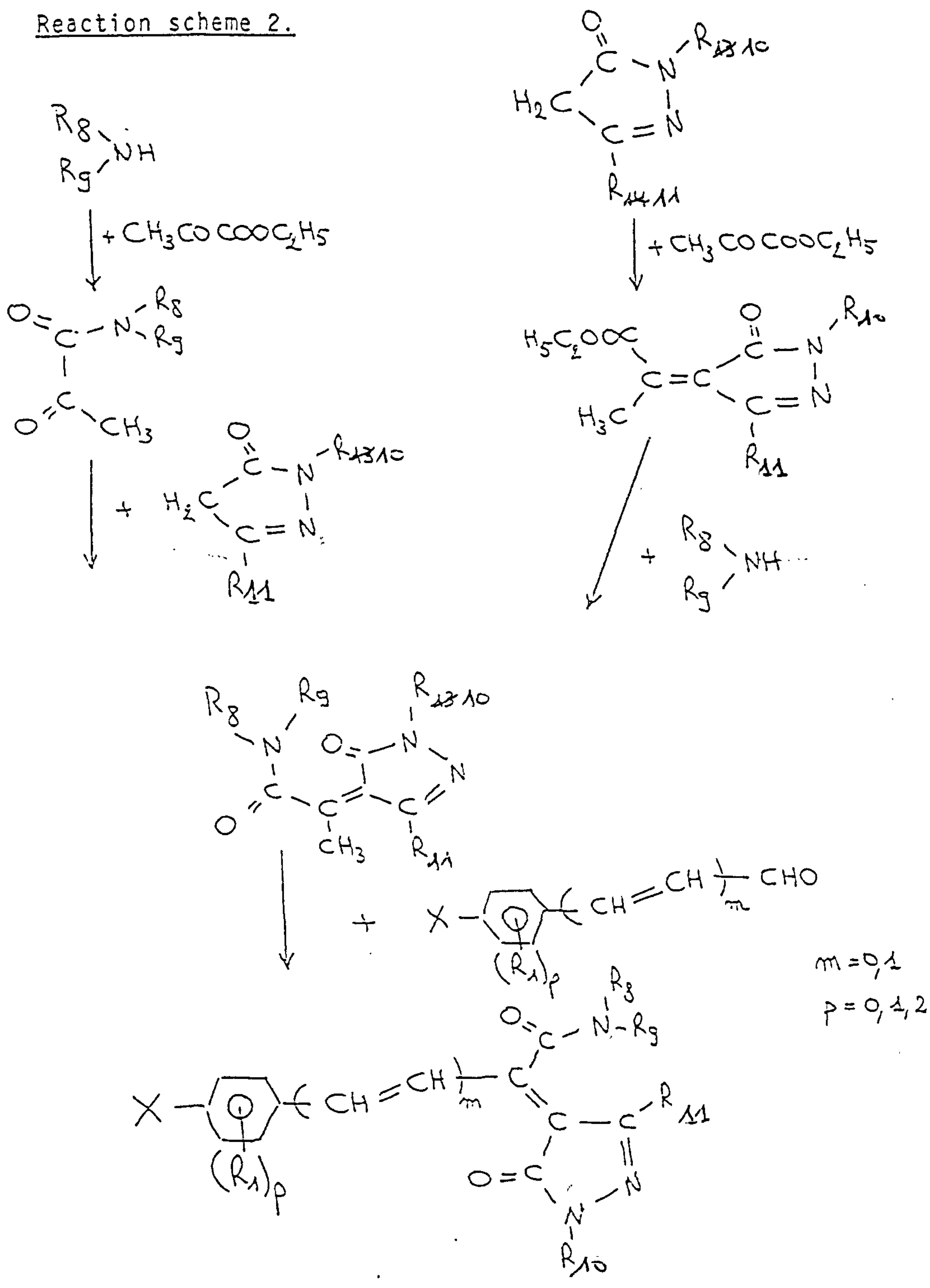


From the prior art it is known that the presence of one or more anionic, weakly-acidic groups in the dyes is important to provide sufficient non-migratory character at coating pH values in the range of 4 to 8.

In the acid pH range the filter dyes according to the present invention can be incorporated in aqueous coating compositions in dispersed form by using commercial mixing devices for making colloidal dispersions, e.g. in gelatin. The size of the dye particles obtained is chosen to facilitate coating and rapid decolouration of the dye. Where the dyes are initially crystallized in the form of particles larger than desired for use, conventional techniques for achieving smaller particle sizes can be employed, such as ball milling, roller milling, sand milling and the like. The solid particle

dispersions cannot only be prepared in the presence of gelatin as a colloidal medium but also e.g. in colloidal silica. A preferred method of preparing an aqueous solid particle dispersion of a photographically useful compound, for incorporation in one of the layers of a photographic silver halide material comprises the steps of

- dissolving a non-watersoluble but alkali-soluble compound in an aqueous alkaline solution, if necessary with the help of an organic water soluble solvent
- precipitating the said compound from said solution in the presence of colloidal silica sol, preferably in the further presence of a dispersing agent by lowering the pH of the solution, e.g. by neutralizing with an aqueous acidic solution
- removing water-soluble salts formed by the precipitation and any organic solvent used, and
- concentrating the dispersion either during or after the precipitation by dialysis or ultrafiltration or after precipitation by flocculation and decantation, followed by washing and further decantation.

Said precipitation in the presence of colloidal silica sol preferably occurs in the further presence of a dispersing agent, like e.g. a 2-N,N,N-trialkylamino-acetic acid and can be performed by simultaneous addition of an aqueous alkaline solution comprising the alkaline-soluble compound and an aqueous acidic solution, to a stirred solution comprising the total or partial amount of colloidal silica sol and of dispersing agent while keeping the pH constant, preferably at a value of less than 6.0, the rest of said amount if any being present in at least one of said solutions.

Preferred dispersing agents used during the preparation of solid silica dispersions are one or more partially ionizable polymer(s) or one or more surfactant(s) or a combination thereof.

Another possibility to obtain ultra fine dye dispersions consists in acidifying a slightly alkaline coating composition during the preparation of the coating composition or "in situ" just before coating it onto the supporting layer. It has been found that the application of this dosage technique allows us to obtain the dyes in a very fine solid particle form, homogeneously divided into the coated layer so that solid particles can hardly be observed even by means of microscopic techniques.

The non-diffusing dyes the synthesis of which has been described hereinbefore and which are added to a hydrophilic layer of a photographic element as a solid particle have a mean diameter of less than 10 µm, more preferably less than 1 µm and still more preferably less than 0.1 µm.

At a pH of at least 10 the dispersed filter dyes are easily solubilized so they are removed almost completely from a hydrophilic waterpermeable colloid layer of a photographic silver halide emulsion material by its common alkaline aqueous liquid processing and leave almost no residual stain. The presence of sulfite in the processing solution contributes to a more rapid discoloration of the filter dyes.

Particularly for 38 s processing cycles, comprising a development, fixing, rinsing and drying step, photographic elements with dyes according to this invention in one or more hydrophilic layers are very rapidly discoloured.

The hydrophilic colloidal layer(s) in which the dye(s) are incorporated in accordance with the present invention can be a backing layer, an antihalation undercoating layer, a silver halide emulsion layer, an intermediate layer and a protective outermost - layer.

Emulsion layers in accordance with this invention may contain light-sensitive silver halide crystals with a diameter of at least 0.1 µm. Intermediate layers in accordance with the present invention may contain very fine light-insensitive silver halide particles with a diameter of 10 to 100 nm known as Lippmann emulsions, incorporated into said layers e.g. to serve as scavangers to prevent oxidized developer products to migrate into adjacent layers.

The layers previously mentioned as suitable layers comprising a filter or antihalation dye may be incorporated in e.g. X-ray materials, graphic arts materials, diffusion transfer materials, black and white or colour cinematographic materials etc.

According to a preferred embodiment the dye or dyes are incorporated in a antihalation back coating layer for single-coated materials or a antihalation undercoating layer or layers, especially for double-coated materials as e. g. X-ray photographic materials.

In an outermost layer or layers or in an emulsion layer or layers one or more dyes according to this invention may be used to adjust the sensitivity of the photographic material as required by the production specifications. So it is possible to apply a dosing feeder just before coating the hydrophilic layer concerned and to control the production of the photographic material in this way, the dye(s) being present in the form of a gelatinous dispersion or in a solid particle state.

The dyes absorbing in the green spectral range being frequently used trimethine dyes can be used advantageously between silver halide emulsion layers of double-sided emulsion coated (duplitized) photographic film material applied in X-ray recording for use with green light emitting X-ray conversion phosphor screens. By said arrangement the green light that would cross the support and to some extent become scattered thereby, is considerably attenuated and cannot give rise to an unsharp image into an opposite silver halide emulsion layer.

Green light emitting phosphor screens and their use in combination with green sensitive silver halide emulsion

layers of a double side coated (duplitized) film are described e.g. in US-P 4,130,428, wherein also several measures, e.g. the use of filter dyes, to reduce cross-over light have been described.

In a particular embodiment of the present invention the dyes are incorporated into a radiographic material that is provided at both sides of the support with a silver halide emulsion layer and an antistress layer as a protective layer coated thereover. The radiographic material preferably has on both sides of the film support silver halide emulsion coatings that are split into two distinctive emulsion layers having silver halide crystals of different average grain size one of which is a high speed emulsion layer and the other is a low speed emulsion layer; the high speed emulsion layer being situated at a larger distance from the support than the low speed emulsion layer. This way the sensitometric curve can be fine-tuned, giving the perfect profile for the specific application. The layer arrangement may also be opposite to the previously cited sequence in order to get a higher contrast. Moreover even without using a separate anticrossover layer this layer arrangement reduces crossover, especially in the critical low density area. In the presence of crossover preventing antihalation undercoat layers containing the dyes according to this invention the crossover reduction is improved without leaving a colour stain upon processing, especially upon rapid processing in less than 60 seconds, preferably in 38 seconds as a reference processing time of materials with high-throughput.

All combinations of symmetrically double-sized films with a symmetric or asymmetric set of intensifying screens or combinations of double-sized films with asymmetric emulsion layers, whether or not duplitized, in combination with a symmetric or asymmetric set of intensifying screens can be useful, depending on the specific needs required.

According to another embodiment said green-light absorbing dyes can be used in a antihalation layer of a photographic silver halide emulsion material in order to improve image sharpness by absorbing exposure light penetrating the emulsion layer(s) into the direction of the support. The use of said mainly green light absorbing dyes in an antihalation layer is particularly advantageous in silver halide emulsion materials that are made spectrally sensitive to green light and of which the exposure proceeds with a green light emitting laser e.g. argon ion laser the main power of which is emitted at 488 and 514 nm.

The following examples illustrate the present invention without however limiting it thereto.

EXAMPLES

In Table I, formulae of the dyes as used in the examples are given.

Table I: Formulae of the dyes used in the examples.

Dye 1 (invention)

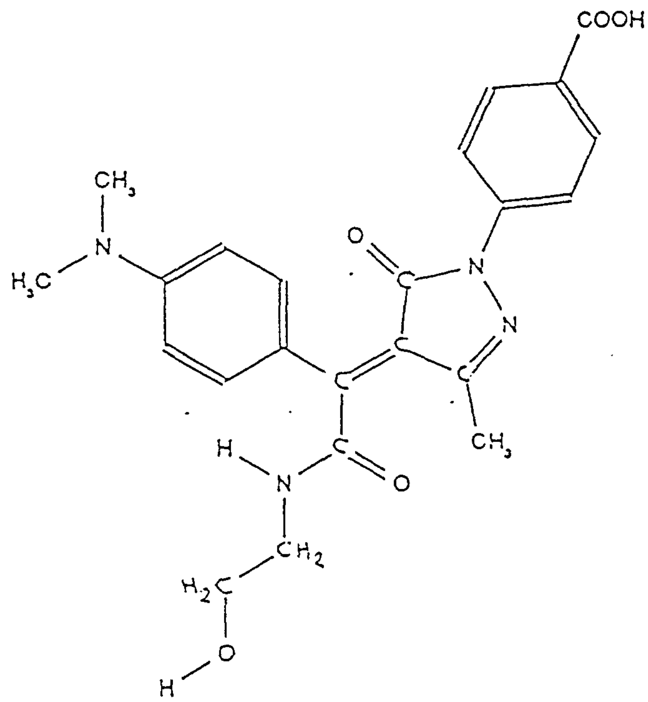

(I)

Dye 2 (comparative example 1, corresponding to Dye 1 of Table 1 of US-P 4,857,446)

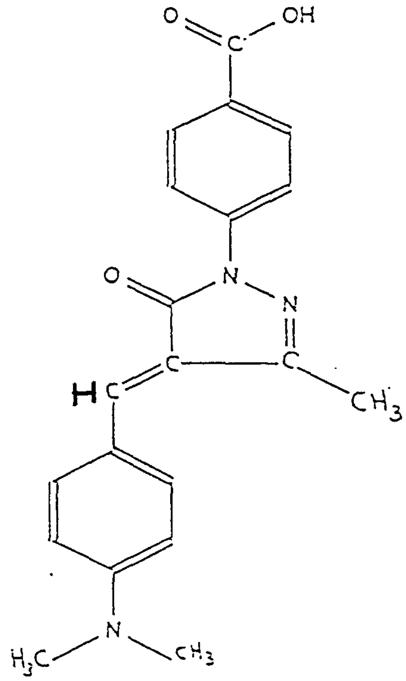

(II)

Dye 3 (comparative example 2, corresponding to Dye 11 of Table 2 of US-P 4,857,446)

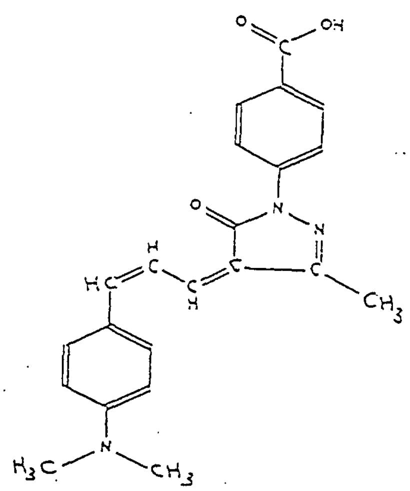

(III)

1. Synthesis of the monomethine dye 1.

89.4 ml of oxalyl chloride and 500 ml diethylether were placed in a reactor vessel and colled to 0°C. A solution of N,N-diemthylaniline in 500 ml diethyl ether was carefully added over a period of 1 hr. The reaction mixture was stirred overnight at 0°C, after which time 183 ml ethanolamine was added, followed by a solution of 80 g NaOH in 1000 ml water. The yellow precipitate (193 g) was filtered and was shown to have an amide structure corresponding to formula B, given hereinbefore. 1.18 g of the amide, 1.09 g 1-(4-carboxyphenyl)-3-methyl pyrazolone and 1 g $ZnCl_2$

were refluxed in 25 ml ethanol for 24 hrs. The resulting red precipitate (1.9 g) was rinsed with acetone and dried, and was shown by spectroscopy to have the structure of product C (dye 1) given hereinbefore.

2. Optical properties of the dyes coated as a dispersion on a film support.

- Procedure for the preparation of the dye dispersion
  10 g of filter dye was dispersed at 40°C in 200 g of a 10% aqueous gelatin solution by using a rotating pearl mill containing as a milling material zirconium oxide pearls sizing 0.6 to 0.8 µm. At a dye particle size of about 1 µm the milling process was stopped and the dispersion separated from the milling material.

- Coating procedure
  Chromium (III) acetate as a hardening agent and an additional amount of gelatin were added to the above prepared dye dispersion kept at a temperature of 36°C and a pH value of 6.1.
  Said dispersion was double-side coated and dried on a polyethylene terephtalate film support of 175 µm thickness in order to obtain at each side a dye coverage of 0.1 g/m$^2$, a gelatin coverage of 1 g/m$^2$ and a coverage of hardening agent of 0.016 g/m$^2$.

In Table II the maximum absorption wavelength (λ-max) of the coated materials is given together with the half band width (HWB) values of the absorption wavelength expressed in nm, the density (D) measured at λ-max and at 540 nm, the latter being the main emission wavelenght of a $Gd_2O_2S$:Tb phosphor used in X-ray intensifying screens. Absorption spectra were measured at a Diano Corporation Match Scan spectrophotometer with diffuse light.

Table II

| Optical properties of dyes in the coated layer. | | | | |
|---|---|---|---|---|
| Dye No. | λ-max (nm) | HBW (nm) | D at λ-max | D at 540 nm |
| 1 (invention) | 560 | 166 | 0.41 | 0.40 |
| 2 (comparison) | 455 | 176 | 0.43 | 0.24 |
| 3 (comparison) | 500 | 231 | 0.63 | 0.60 |

In order to assess the resistance to diffusion of the dye in the coated layer, the above described coating of each dye was rinsed with destilled water at 20°C for 5 minutes. Before and after rinsing the spectral density D at λ-max was measured at the double-side coated material as has been summarized in Table III.

Table III

| Density measured at the maximum absorption wavelength λ-max. | | |
|---|---|---|
| Dye No. | D at λ-max | |
| | Before rinsing | After rinsing |
| 1 (invention) | 0.41 | 0.40 |
| 2 (comparison) | 0.43 | 0.43 |
| 3 (comparison) | 0.63 | 0.62 |

The negligible change in spectral density D at λ-max before and after rinsing with water is a measure for the resistance to diffusion of the dye in the coating layer.

3. Decolourizing properties of the dyes, coated in an anti-crossover layer, under practical processing conditions.

To check the decolourizing properties of the dyes in practical circumstances the dyes were coated on both sides of a polyethylene terephtalate film support in an anti-cross-over layer and were overcoated with an emulsion layer and a protective layer. The dye coverage was adjusted so that the optical density at 540 nm was 0.15 for the double side coated sample. Next, the samples were processed in a 90 or 38 seconds processing cycle and the spectral density at λ-max of the dye was determined. A low value of this spectral density means that the dye decolourizes well during the processing. The composition of the sample coatings, developer and fixers and the processing conditions

are given hereinafter:

Composition of the coated samples.

In the emulsion layer no use was made of a spectral sensitizer because of the interference of its absorption spectrum with the dyes under investigation. The coating weight, expressed in g/m$^2$ per side of the different layers, was as follows:

- anti-cross-over layer:

| | |
|---|---|
| gelatin<br>dye see Table IV<br>chromium(III) acetate | 1g/m$^2$<br><br>0.016 g/m$^2$ |

- emulsion layer: all amounts are given in g/m$^2$

| | |
|---|---|
| AgBr(I)-crystals (2 mole% of iodide; 98 mole% of bromide) | 4.15 (as $AgNO_3$) |
| gelatin | 2.10 |
| 4-hydroxy-6-methyl-1,3,3a,7-tetraazaindene | 0.006 |
| sorbitol | 0.20 |

- protective layer:

| | |
|---|---|
| gelatin | 1.10 |
| polymethylmethacrylate (average particle diameter: 6 μm) | 0.023 |
| formaldehyde | 0.10 |

Processing conditions and composition of developers.

- Conditions for the 90 seconds processing cycle.
- processing machine : CURIX 402 (Agfa-Gevaert trade name) with the following time (in seconds (sec.)) and temperature (in °C) characteristics:

| | |
|---|---|
| loading | 3.4 sec. |
| developing | 23.4 sec./ 35°C in developer AGFA G138 (trade name) |
| cross-over | 3.8 sec. |
| fixing | 15.7 sec./ 35°C in fixer AGFA G334 (trade name) |
| cross-over | 3.8 sec. |
| rinsing | 15.7 sec./ 20°C. |
| drying | 32.2 sec. (cross-over time included) |
| total time | 98.0 sec. |

- Conditions for the 38 seconds processing cycle.
- processing machine : CURIX HT530 (Agfa-Gevaert trade name) with the following time (in seconds (sec.)) and temperature (in °C) characteristics:

| | |
|---|---|
| loading | 0.2 sec. |
| developing | 9.3 sec./ 35°C in developer II described hereinafter |
| cross-over | 1.4 sec. |

(continued)

| | |
|---|---|
| rinsing | 0.9 sec. |
| cross-over | 1.5 sec. |
| fixing | 6.6 sec./ 35°C in fixer II described hereinafter |
| cross-over | 2.0 sec. |
| rinsing | 4.4 sec. |
| cross-over | 4.6 sec. |
| drying | 6.7 sec. |
| total time | 37.6 sec. |

Composition of the three-part developer for the 38 seconds processing cycle

- concentrated part A

| | |
|---|---|
| hydroquinone | 106.0 g |
| potassium sulphite (65% solution) | 249.0 g |
| potassium bromide | 12.0 g |
| ethylenediamine tetraacetic acid, sodium salt trihydrate | 9.6 g |
| potassium hydroxyde | 77.0 g |
| potassium carbonate | 38.0 g |
| sodiumtetraborate, decahydrate | 70.0 g |
| 5-methylbenzotriazole | 0.076 g |
| diethylene glycol | 56.0 g |
| demineralized water to make 1 liter | |
| pH adjusted to 11.80 at 25°C with potassium hydroxide. | |

- concentrated part B:

| | |
|---|---|
| phenidone (1-phenyl-3-pyrazolidinone) | 20.0 g |
| acetic acid | 30.1 g |
| 5-nitro-indazole | 1.15 g |
| diethylene glycol to make 100 ml | |

- concentrated part C:

| | |
|---|---|
| glutaric dialdehyde 50% solution) | 17.8 g |
| potassium metabisulphite | 26.0 g |
| water to make 100 ml | |

For initiation of the processing the three parts were mixed in the following ratio: 250 ml of part A, 700 ml of water, 25 ml of part B and 25 ml of part C. No starter solution was added. A pH of 10.40 at 25°C was measured.

Composition of fixer II (containing a hardener)

- concentrated part A:

| | |
|---|---|
| ammoniumthiosulphate (78% solution) | 661 g |
| sodium sulphite | 54 g |

(continued)

| | |
|---|---|
| boric acid | 25 g |
| sodium acetate trihydrate | 70 g |
| acetic acid | 40 g |
| water to make 1 liter | |
| pH adjusted with acetic acid to 5.30 at 25°C. | |

- concentrated part B:

| | |
|---|---|
| water | 150 ml |
| acetic acid | 10 g |
| sulphuric acid | 13 g |
| aluminium sulphate (34% solution) | 27 g |
| water to make 250 ml | |

The fixer ready for use was then made by mixing concentrated part A, water and concentrated part B in the following ratio: respectively 250 ml, 687.5 ml and 62.5 ml. A pH of this mixture of 4.25 at 25°C was measured.

Densities at λ-max of the dyes after processing are given in Table IV.

Table IV:

| Evaluation of the optical densities of the dyes. | | | |
|---|---|---|---|
| Dye No. | coated dye amount in $g/m^2$ per side | optical density at λ-max after processing | |
| cycle | | 90 s cycle | 38 s |
| 1 (invention) | 0.038 | 0.000 | 0.020 |
| 2 (comparison) | 0.063 | 0.000 | 0.015 |
| 3 (comparison) | 0.025 | 0.005 | 0.025 |

As can be seen from Table IV, even in the 38 s-processing cycle the optical density at the maximum absorption wavelength is reduced to an acceptable level.

4. Evaluation of the photographic properties of the dyes in an anti-cross-over layer.

Coating procedure

The coatings of item 3 were repeated, except for the addition per mole of $AgNO_3$ used for the emulsion of 470 mg of the spectral sensitizer anhydro-5,5'-dichloro-3,3'-bis(n.sulfobutyl)-9-ethyloxacarbo-cyanine hydroxide. In addition a coating without a dye added to the anti-cross-over layer was performed as a reference.

Exposure,sensitometric and densitometric data:

Samples of those coatings were exposed with green light of 540 nm during 0.1 seconds using a continous wedge and were processed during the 90 seconds cycle described below. The density as a function of the light dose was measured and therefrom were determined the following parameters:

- fog level (with an accuracy of 0.001 density),
- the relative speed S at a density of 1 above fog (the sample with the comparative example was adjusted to a relative speed value of 100),

Determination of the cross-over percentage:

The cross-over percentage (% cross-over) was determined as follows. The double side coated samples were adjusted between a single green light emitting screen (CURIX ortho Regular : Agfa-Gevaert trade name) and a white

paper, replacing the second screen. This film-screen element, directed with its light emitting screen to the X-ray tube, was then exposed with varying X-ray doses, expressed as log E. After processing these samples in the 90 seconds cycle, the minimal dose (log E) needed to obtain a density of 0.5 above fog was determined for the frontlayer (log E front) and the backlayer (log E back) separately. The cross-over percentage was then calculated according to the following equation :

$$\% \text{ cross-over} = 100/\text{antilog}(\log E \text{ back} - \log E \text{ front})$$

In table V the results of these photographic tests are tabulated.

Table V :

| Photographic effect of the dyes in an anti-cross-over layer: sensitometry and cross-over percentage. | | | | |
|---|---|---|---|---|
| sample Dye No. | coated dye amount per side(g/m$^2$) fog | | sensitometry | |
| | | | speed | % cross-over |
| no dye (reference) | 0 | 0.016 | 100 | 40 |
| dye 1 (invention) | 0.038 | 0.017 | 83 | 30 |
| dye 2 (comparison) | 0.063 | 0.017 | 89 | 31 |
| dye 3 (comparison) | 0.025 | 0.017 | 83 | 28 |

This table shows that the dyes (invention and comparative examples) significantly reduce the cross-over percentage with an acceptable decrease in sensitivity. It is further shown that fog is not influenced in the presence of the dyes, and that even with a significantly lower coating weight, the dye according to the invention shows a similar crossover percentage as dye 2 used in the comparative coating. Besides even versus dye 3, which is coated in a lower amount and which shows similar sensitometric results and cross-over characteristics, the decolourizing properties are better for the dye in accordance with this invention, especially for shorter processing cycles, e.g. the 38 s cycle, as has been shown in Table IV hereinbefore.

## Claims

1. A photographic material comprising a support and at least one light-sensitive silver halide emulsion layer **characterised in that** it comprises in a hydrophilic colloid layer at least one filter dye present in solid particle dispersion form corresponding to the following general formula (I):

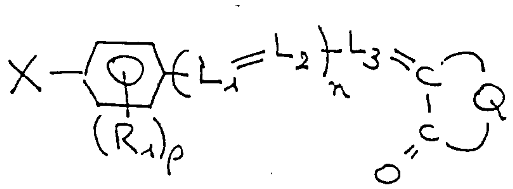

(I)

wherein

n represents 0 or 1;
p represents 0, 1 or 2;
Q represents the atoms necessary to form an acidic nucleus such as pyrazolone, barbituric acid, thiobarbituric acid, rhodanine, hydantoine, oxazolidindione, thio-oxazolidindione, isoxazolinone etc.;
$R_1$ represents hydrogen, substituted or unsubstituted alkyl, substituted or unsubstituted aryl, $COOR_2$,$NHCOR_3$ or $NHSO_2R_4$ with $R_2$ representing hydrogen or substituted or unsubstituted alkyl, $R_3$ and $R_4$ representing substituted or unsubstituted alkyl, or substituted or unsubstituted aryl,
X represents $OR_5$, $SR_5$ or $NR_6R_7$, wherein
$R_5$ represents H, substituted or unsubstituted alkyl, substituted or unsubstituted aryl and
each of $R_6$ and $R_7$ which may be the same or different represents hydrogen, substituted or unsubstituted alkyl, substituted or unsubstituted aryl or the necessary atoms, e.g. trimethylene, to form a ring together with the N-atom to which they are attached and the C-atom of the phenylene ring in ortho position with respect to said N-atom; $R_6$ and $R_7$ together may also represent the necessary atoms to form a ring with the N-atom to which they are attached;

$L_1$, $L_2$, $L_3$ represent substituted or unsubstituted methine with the proviso that at least one of $L_1$, $L_2$ or $L_3$ must be substituted by $-CONR_8R_9$;

$R_8$ and $R_9$ which may be the same or different represent hydrogen, substituted or unsubstituted alkyl, substituted or unsubstituted aryl,

and wherein at least one of $R_1$ to $R_9$ contains a weakly acidic ionizable group.

2. A photographic material according to claim 1 wherein said at least one dye is a filter dye corresponding to the following general formula II:

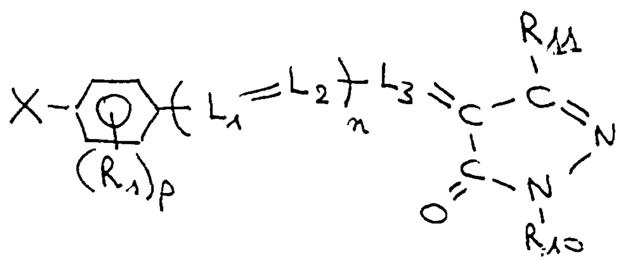

(II)

wherein each of n, p, X, $R_1$, $L_1$, $L_2$ and $L_3$ has one of the meanings given in claim 2 and wherein

$R_{10}$ represents hydrogen, substituted or unsubstituted alkyl, substituted or unsubstituted aryl, or sulfolanyl,

$R_{11}$ represents hydrogen, substituted or unsubstituted alkyl, substituted or unsubstituted aryl, $COOR_2$, $NHCOR_3$, $NHSO_2R_4$, with $R_2$, $R_3$ and $R_4$ representing hydrogen, substituted or unsubstituted alkyl, or substituted or unsubstituted aryl, and wherein at least one of $R_1$ to $R_{11}$ contains an alkali-soluble group.

3. A photographic material according to any of claims 1 or 2 wherein said at least one filter dye is incorporated into an antihalation undercoat layer coated between the support and at least one silver halide emulsion layer.

4. A photographic material according to any of claims 1 or 2 wherein said at least one filter dye is incorporated into a backing layer.

5. A photographic material according to any of claims 1 to 4 wherein the dye(s) is(are) present in a hydrophilic colloid layer in an amount of 0.01 to 1.0 mmole/$m^2$.

6. A photographic material according to any of claims 3 to 5 wherein the filter dye(s) is(are) present as a gelatinous dispersion(s).

7. A photographic material according to any of claims 3 to 5 wherein the the filter dye(s) is(are) present as solid silica particle dispersion(s).

8. A photographic material according to any of claims 3 to 7 wherein said photographic material is an X-ray material.

9. Use of a photographic material according to claim 8 for rapid processing applications shorter than 60 seconds, comprising the developing, fixing, rinsing and drying steps.

10. Method for preparing a photographic material according to any of claims 1 to 8 comprising the step of providing at least one dye according to formula (I) or (II) in a solid particle state by acidifying a slightly alkaline coating solution thereof "in situ" at the moment said coating solution is applied.

## Patentansprüche

**1.** Ein fotografisches Material, das einen Träger und zumindest eine lichtempfindliche Silberhalogenid-Emulsionsschicht enthält, **dadurch gekennzeichnet, daß** das Material in einer hydrophilen Kolloidschicht zumindest einen in Form einer Dispersion von Festteilchen vorliegenden Filterfarbstoff enthält, wobei der Farbstoff der folgenden allgemeinen Formel (I) entspricht :

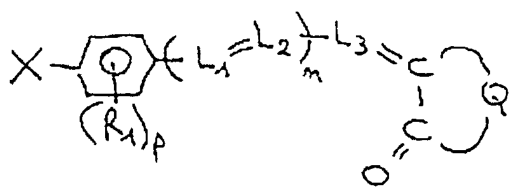

(I)

n 0 oder 1,
p 0, 1 oder 2,
Q die zur Bildung eines Säureringes wie eines Pyrazolonringes, Barbitursäureringes, Thiobarbitursäureringes, Rhodaninringes, Hydantoinringes, Oxazolidindionringes, Thiooxazolidindionringes, Isoxazolinonringes usw. benötigten Atome,
$R_1$ ein Wasserstoffatom, eine substituierte oder nicht-substituierte Alkylgruppe, eine substituierte oder nicht-substituierte Arylgruppe, $COOR_2$, $NHCOR_3$ oder $NHSO_2R_4$, wobei $R_2$ ein Wasserstoffatom oder eine substituierte oder nicht-substituierte Alkylgruppe bedeutet und $R_3$ und $R_4$ eine substituierte oder nicht-substituierte Alkylgruppe oder eine substituierte oder nicht-substituierte Arylgruppe bedeuten, X $OR_5$, $SR_5$ oder $NR_6R_7$, wobei
$R_5$ ein Wasserstoffatom, eine substituierte oder nicht-substituierte Alkylgruppe oder eine substituierte oder nicht-substituierte Arylgruppe bedeutet, und
$R_6$ und $R_7$, gleich oder verschieden, jeweils ein Wasserstoffatom, eine substituierte oder nicht-substituierte Alkylgruppe, eine substituierte oder nicht-substituierte Arylgruppe oder die benötigten Atome bedeuten, z.B. Trimethylen, die zusammen mit dem N-Atom, an dem sie gebunden sind, und dem C-Atom des Phenylenringes in ortho-Stellung, bezogen auf das N-Atom, einen Ring bilden, wobei $R_6$ und $R_7$ zusammen ebenfalls die benötigten Atome bedeuten können, um zusammen mit dem N-Atom, an dem sie gebunden sind, einen Ring zu bilden,
$L_1$, $L_2$ und $L_3$ eine substituierte oder nicht-substituierte Methingruppe, mit der Maßgabe, daß zumindest ein Element von $L_1$, $L_2$ oder $L_3$ durch eine $-CONR_8R_9$-Gruppe substituiert sein muß,
$R_8$ und $R_9$, gleich oder verschieden, jeweils ein Wasserstoffatom, eine substituierte oder nicht-substituierte Alkylgruppe oder eine substituierte oder nicht-substituierte Arylgruppe,

und wobei zumindest ein Element von $R_1$ bis $R_9$ eine schwach saure ionisierbare Gruppe enthält.

**2.** Ein fotografisches Material nach Anspruch 1, **dadurch gekennzeichnet, daß** der zumindest eine Farbstoff ein Filterfarbstoff der folgenden allgemeinen Formel (II) ist :

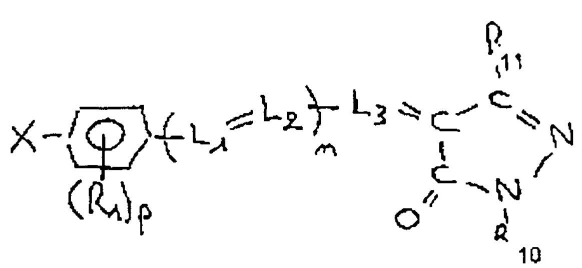

(II)

in der :

n, p, X, $R_1$, $L_1$, $L_2$ und $L_3$ die diesen Symbolen in Anspruch 1 zugemessene Bedeutung haben, und wobei $R_{10}$ ein Wasserstoffatom, eine substituierte oder nicht-substituierte Alkylgruppe, eine substituierte oder nicht-substituierte Arylgruppe oder eine Sulfolanylgruppe bedeutet,
$R_{11}$ ein Wasserstoffatom, eine substituierte oder nicht-substituierte Alkylgruppe, eine substituierte oder nicht-substituierte Arylgruppe, eine $COOR_2$-Gruppe, eine $NHCOR_3$-Gruppe oder eine $NHSO_2R_4$-Gruppe bedeutet, wobei $R_2$, $R_3$ und $R_4$ ein Wasserstoffatom, eine substituierte oder nicht-substituierte Alkylgruppe oder eine substituierte oder nicht-substituierte Arylgruppe bedeuten und zumindest ein Element von $R_1$ bis $R_{11}$ eine alkalilösliche Gruppe enthält.

3. Ein fotografisches Material nach einem der Ansprüche 1 oder 2, **dadurch gekennzeichnet, daß** der zumindest eine Farbstoff in eine unterliegende Lichthofschutzschicht zwischen dem Träger und zumindest einer Silberhalogenid-Emulsionsschicht eingearbeitet ist.

4. Ein fotografisches Material nach einem der Ansprüche 1 oder 2, **dadurch gekennzeichnet, daß** der zumindest eine Filterfarbstoff in eine Rückschicht eingearbeitet ist.

5. Ein fotografisches Material nach einem der Ansprüche 1 bis 4, **dadurch gekennzeichnet, daß** der (die) Farbstoff (e) in einer Menge zwischen 0,01 und 1,0 $Mmol/m^2$ in eine hydrophile Kolloidschicht eingearbeitet ist (sind).

6. Ein fotografisches Material nach einem der Ansprüche 3 bis 5, **dadurch gekennzeichnet, daß** der (die) Filterfarbstoff(e) als (eine) gelatinöse Dispersion(en) enthalten ist (sind).

7. Ein fotografisches Material nach einem der Ansprüche 3 bis 5, **dadurch gekennzeichnet, daß** der (die) Filterfarbstoff(e) als (eine) Dispersion(en) von festen Kieselsäureteilchen enthalten ist (sind).

8. Ein fotografisches Material nach einem der Ansprüche 3 bis 7, **dadurch gekennzeichnet, daß** das fotografische Material ein Röntgenmaterial ist.

9. Verwendung eines fotografischen Materials nach Anspruch 8 für Anwendungen mit einer weniger als 60 s dauernden Schnellverarbeitung, die die Stufen der Entwicklung, Fixierung, Spülung und Trocknung umfaßt.

10. Verfahren zur Herstellung eines fotografischen Materials nach einem der Ansprüche 1 bis 8, wobei zumindest ein Farbstoff der Formel (I) oder (II) in Form von Festteilchen bereitgestellt wird, indem eine leicht alkalische Gießlösung des Farbstoffes zum Zeitpunkt des Auftrags der Gießlösung "in situ" angesäuert wird.

## Revendications

1. Matériau photographique comprenant un support et au moins une couche d'émulsion photosensible à l'halogénure d'argent, **caractérisé en ce qu'**il comprend, dans une couche colloïdale hydrophile, au moins un colorant filtrant présent sous la forme d'une dispersion de particules solides, répondant à la formule générale I indiquée ci-après :

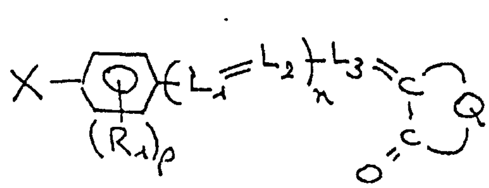
(I)

dans laquelle

n représente 0 ou 1 ;
p représente 0, 1 ou 2 ;
Q représente les atomes nécessaires pour former un noyau acide tel qu'un noyau pyrazolone, un noyau d'acide barbiturique, un noyau d'acide thiobarbiturique, un noyau de rhodanine, un noyau d'hydantoïne, un noyau d'oxazolidinedione, un noyau de thio-oxazolidinedione, un noyau d'isoxazolone, etc. ;
$R_1$ représente un atome d'hydrogène, un groupe alkyle substitué ou non substitué, un groupe aryle substitué

ou non substitué, un groupe $COOR_2$, un groupe $NHCOR_3$ ou un groupe $NHSO_2R_4$ où $R_2$ représente un atome d'hydrogène ou un groupe alkyle substitué ou non substitué, $R_3$ et $R_4$ représentant un groupe alkyle substitué ou non substitué ou un groupe aryle substitué ou non substitué ;

X représente un groupe $OR_5$, un groupe $SR_5$ ou un groupe $NR_6R_7$, dans lesquels

$R_5$ représente un atome d'hydrogène, un groupe alkyle substitué ou non substitué, un groupe aryle substitué ou non substitué, et

chacun des radicaux $R_6$ et $R_7$, qui peuvent être identiques ou différents, représentent un atome d'hydrogène, un groupe alkyle substitué ou non substitué, un groupe aryle substitué ou non substitué, ou encore les atomes nécessaires, par exemple un groupe triméthylène, pour former un noyau de manière conjointe avec l'atome d'azote auquel ils sont fixés et avec l'atome de carbone du noyau phénylène en position ortho par rapport audit atome d'azote ;

$L_1$, $L_2$, $L_3$ représentent un groupe méthine substitué ou non substitué, avec cette réserve qu'au moins un des radicaux $L_1$, $L_2$ et $L_3$ doit être substitué par un groupe $CONR_8R_9$ ;

$R_8$ et $R_9$, qui peuvent être identiques ou différents, représentent un atome d'hydrogène, un groupe alkyle substitué ou non substitué, un groupe aryle substitué ou non substitué ;

et dans lequel au moins un des radicaux $R_1$ à $R_9$ contient un groupe ionisable faiblement acide.

**2.** Matériau photographique selon la revendication 1, dans lequel ledit ou lesdits colorants représentent un colorant filtrant répondant à la formule générale (II) indiquée ci-après :

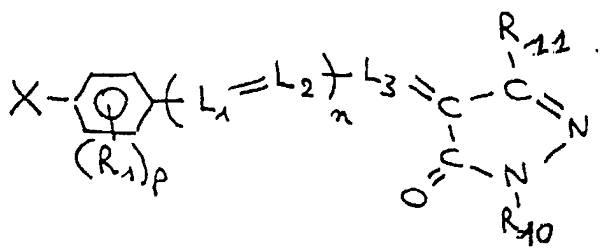

(II)

dans laquelle chacun des radicaux n, p, X, $R_1$, $L_1$, $L_2$ et $L_3$ possède une des significations indiquées dans la revendication 1 et dans laquelle

$R_{10}$ représente un atome d'hydrogène, un groupe alkyle substitué ou non substitué, un groupe aryle substitué ou non substitué, ou encore un groupe sulfolanyle,

$R_{11}$ représente un atome d'hydrogène, un groupe alkyle substitué ou non substitué, un groupe aryle substitué ou non substitué, un groupe $COOR_2$, un groupe $NHCOR_3$ ou un groupe $NHSO_2R_4$ où $R_2$, $R_3$ et $R_4$ représentent un atome d'hydrogène, un groupe alkyle substitué ou non substitué ou un groupe aryle substitué ou non substitué, et dans laquelle au moins un des radicaux $R_1$ à $R_{11}$ contient un groupe soluble dans les alcalis.

**3.** Matériau photographique selon l'une quelconque des revendications 1 ou 2, dans lequel ledit ou lesdits colorants filtrants sont incorporés dans une couche sous-jacente antihalo coulée entre le support et au moins une couche d'émulsion à l'halogénure d'argent.

**4.** Matériau photographique selon l'une quelconque des revendications 1 ou 2, dans lequel ledit ou lesdits colorants filtrants sont incorporés dans une couche dorsale.

**5.** Matériau photographique selon l'une quelconque des revendications 1 à 4, dans lequel ledit ou lesdits colorants sont présents dans une couche colloïdale hydrophile en une quantité de 0,01 à 1,0 millimole/$m^2$.

**6.** Matériau photographique selon l'une quelconque des revendications 3 à 5, dans lequel ledit ou lesdits colorants filtrants sont présents sous la forme d'une ou de plusieurs dispersions gélatineuses.

**7.** Matériau photographique selon l'une quelconque des revendications 3 à 5, dans lequel ledit ou lesdits colorants filtrants sont présents sous la forme d'une ou de plusieurs dispersions de particules de silice solides.

**8.** Matériau photographique selon l'une quelconque des revendications 3 à 7, dans lequel ledit matériau photographique est un matériau radiographique.

9. Utilisation d'un matériau photographique selon la revendication 8 pour des applications de traitement rapide, inférieure à 60 secondes, comprenant les étapes de développement, de fixage, de rinçage et de séchage.

10. Procédé pour préparer un matériau photographique selon l'une quelconque des revendications 1 à 8, comprenant l'étape consistant à procurer au moins un colorant répondant à la formule I ou II à l'état de particules solides par acidification d'une solution d'enduction légèrement alcaline dudit colorant "in situ" au moment de l'application de ladite solution d'enduction.